# DEMANDE DE BREVET EUROPEEN

(11) **EP 4 299 390 A1**
(43) Date de publication de la demande: **03.01.2024**
(21) Numéro de dépôt: 23178456.2
(22) Date de dépôt: 09.06.2023
(51) Int. Cl.: B60R 21/2165

(54) **ENSEMBLE POUR PANNEAUX DE GARNITURE POUR HABITACLE**

(30) Priorité: 29.06.2022 FR 2206556
(71) Demandeur: SMRC Automotive Holdings Netherlands B.V., 1101 BA Amsterdam (NL)
(72) Inventeur: AUTEM, Laurent, 62860 SAINS-LES-MARQUION (FR); FORGERON, Jérôme, 62220 CARVIN (FR); EMERY, Pascal, 62410 MEURCHIN (FR)
(74) Mandataire: Cabinet Nuss

(57) **Abrégé**

La présente invention concerne un ensemble (1) de pièce de garniture comprenant une superposition réalisée par au moins :
- un panneau support (2) en matériau composite comprimé ou injecté combinant au moins une résine thermoplastique et des fibres naturelles,
- un revêtement de garniture (3) portant au moins une surface (311) orientée vers l'intérieur de l'habitacle du véhicule, et comprenant notamment :
- un revêtement textile ou peau (31) réalisant une surface (311) orientée vers l'habitacle, ce revêtement (31) étant déchirable sous l'effet d'une force exercée contre la surface opposée à la surface (311) orientée vers l'habitacle,
- une interface (32) d'adhésion du revêtement textile ou peau (31) au panneau support (2), cette interface (32) présentant au moins une composition adhésive ou susceptible d'opérer une adhésion au panneau support (2),

l'ensemble (1) comprenant également au moins un affaiblissement formé par un évidement borgne dans l'épaisseur de la superposition de l'ensemble (1).

## Description

La présente invention se rapporte au domaine des panneaux de garniture pour habitacle de véhicule et plus particulièrement au domaine des panneaux de garniture à impact carbone réduit.

Dans le cadre des problématiques écologiques actuelles, l'importance des enjeux environnementaux contraint les industriels à diminuer l'empreinte carbone des produits manufacturés. L'industrie automobile qui, jusqu'à présent, était intimement liée aux énergies fossiles et à l'industrie pétrochimique, se trouve forcée à considérer son impact sur l'environnement. Cette nouvelle appréhension du facteur environnemental dans la conception des produits de l'industrie automobile a ainsi vocation à réduire les émissions de CO₂ de véhicules, tant au cours des différentes étapes de leur production que lors de leurs fonctionnements.

Les panneaux de garnitures pour habitacle qui s'inscrivent également parmi les produits de l'industrie automobile ne font pas exception à ce souci d'optimisation de la réduction de l'empreinte carbone. C'est ainsi que des planches de bord ont été développées en faisant intervenir notamment l'injection d'un matériau combinant un polymère de type polypropylène ou polyéthylène avec des fibres de verre, carbone ou de textile naturelle tel que proposé par la publication EP 2052833. Toutefois, ce type de solution présente des limites dans la quantité de fibres naturelles intégrées au panneau de garniture en substitution de matériaux pétro-sourcés. En conséquence, ce seuil maximal de fibres naturelles susceptible d'être envisagé limite les possibilités de réduction de la masse de l'équipement automobile et donc impacte la consommation du véhicule. Par ailleurs, dans le cadre d'une association de la planche de bord proposée avec un conduit d'airbag, cette solution de réalisation présente une construction faisant intervenir des compositions particulièrement hétérogènes susceptible d'apporter une fragilisation de la structure de cette planche de bord. Aussi la distribution des lignes d'affaiblissement dans l'épaisseur de la planche de bord s'en trouve limitée, ce qui en réduit les possibilités de réglage et donc en réduit l'efficacité. Ainsi, lors du déploiement du coussin d'airbag, cette limitation combinée à la fragilisation mentionnée ci-dessus risque d'entrainer une rupture, ou un éclatement parasite, ou anarchique de la structure ou des assemblages de la planche de bord, de sorte que la sécurité des passagers à l'intérieur de l'habitacle s'en trouve altérée.

La présente invention a pour but de pallier ces inconvénients en proposant un panneau de garniture pour habitacle de véhicule dont la masse est réduite par rapport aux panneaux de garniture existants et dont l'intégration dans un véhicule permet de conserver, d'une part, des qualités de rigidités et des performances mécaniques d'utilisation et, d'autre part, des qualités de rupture efficace et sécurisée dans le cadre de son association à un conduit d'airbag.

L'invention se rapporte à un ensemble de pièce de garniture pour habitacle intérieur de véhicule comprenant une superposition réalisée par au moins :
- un panneau support en matériau composite comprimé ou injecté combinant au moins une résine thermoplastique et des fibres de renfort,
- un revêtement de garniture portant au moins une surface destinée à être orientée vers l'intérieur de l'habitacle, ce revêtement de garniture comprenant notamment :
   - un revêtement destiné à réaliser une surface orientée vers l'intérieur de l'habitacle, ce revêtement comprenant au moins un textile ou peau adapté pour être déchirable sous l'effet d'une force exercée contre la surface opposée à la surface de l'ensemble destinée à être orientée vers l'intérieur de l'habitacle,
   - une interface d'assemblage ou d'adhésion du revêtement au panneau support, cette interface d'adhésion présentant au moins une composition adhésive ou susceptible d'opérer une adhésion au panneau support,
   l'ensemble comprenant également au moins un affaiblissement formé par une cavité borgne dans l'épaisseur de la superposition de l'ensemble.

L'invention porte également sur un procédé de production d'un ensemble de pièce de garniture selon l'invention, caractérisé en ce que le procédé comprend une étape d'assemblage d'un panneau support en matériau composite comprimé ou injecté combinant au moins une résine thermoplastique et des fibres de renfort avec un revêtement de garniture portant au moins une surface destinée à être orientée vers l'intérieur de l'habitacle.

L'invention sera mieux comprise, grâce à la description ci-après, qui se rapporte aux modes de réalisation préférés, donnés à titre d'exemple non limitatif, et expliqués avec référence aux dessins schématiques annexés, dans lesquels :

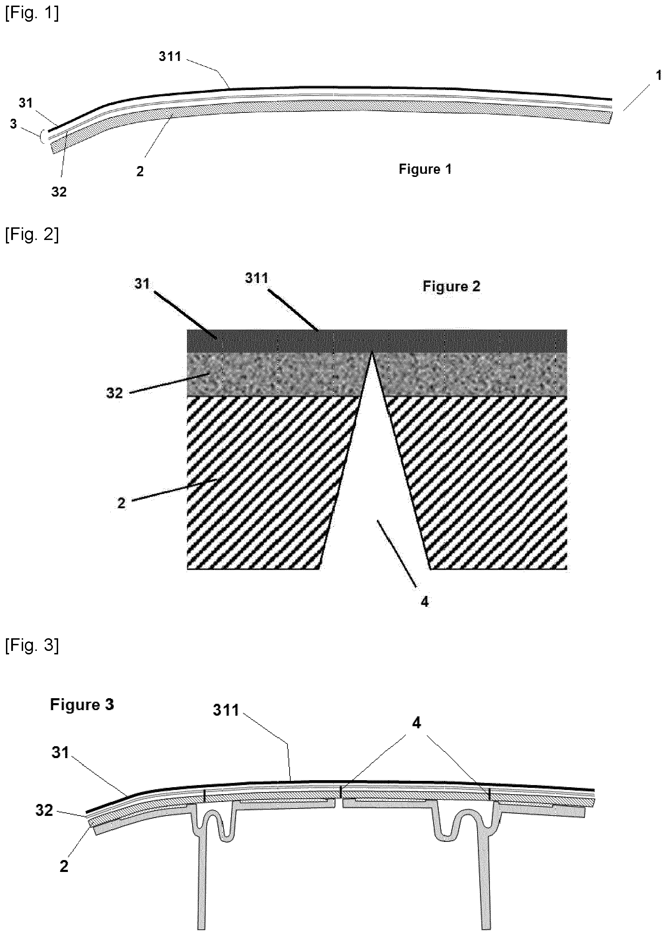

[Fig. 1] représente un exemple d'ensemble de pièce de garniture selon l'invention.
[Fig. 2] représente un exemple d'ensemble de pièce de garniture selon l'invention intégrant une cavité pour la réalisation d'une ligne d'affaiblissement.
[Fig. 3] représente un exemple d'ensemble de pièce de garniture selon l'invention intégrant un panneau d'airbag comprenant un canal d'airbag dont l'orifice est associé à un ou plusieurs volets.

La présente invention concerne un ensemble 1 de pièce de garniture pour habitacle intérieur de véhicule comprenant une superposition réalisée par au moins :
- un panneau support 2 en matériau composite comprimé ou injecté combinant au moins une résine thermoplastique et des fibres de renfort,
- un revêtement de garniture 3 portant au moins une surface 311 destinée à être orientée vers l'intérieur de l'habitacle, ce revêtement de garniture 3 comprenant notamment :
   - un revêtement destiné à réaliser une surface 311 orientée vers l'intérieur de l'habitacle, ce revêtement comprenant au moins un textile ou peau 31 adapté pour être déchirable sous l'effet d'une force exercée contre la surface opposée à la surface 311 de l'ensemble destinée à être orientée vers l'intérieur de l'habitacle,
   - une interface 32 d'assemblage ou d'adhésion du revêtement au panneau support 2, cette interface 32 d'assemblage ou d'adhésion présentant au moins une composition adhésive ou susceptible d'opérer une adhésion au panneau support 2,
   l'ensemble 1 comprenant également au moins un affaiblissement 4 formé par une cavité borgne dans l'épaisseur de la superposition de l'ensemble 1.

L'ensemble selon l'invention fait ainsi intervenir une superposition de différents éléments présentant des rôles respectifs spécifiquement adaptés à l'ensemble 1 de pièce de garniture tout en permettant un allègement de la masse de l'ensemble 1 de sorte que lors du fonctionnement du véhicule qui intègre un tel ensemble 1 de pièce de garniture, ce véhicule soit en mesure de restreindre sa consommation d'énergie et permet une émission réduite de CO₂. A ce titre, le panneau support 2 de matériau composite comprimé ou injecté est allégé grâce à une réalisation combinant, d'une part, une résine se présentant sous la forme de fibres thermoplastiques et, d'autre part, des fibres de renfort susceptibles d'être composées de fibres naturelles : fibres de lin, de sisal, de chanvre, de kénaf, de miscanthus ou un mélange de plusieurs de ces fibres ou encore d'être composées de fibre de carbone ou de fibres de verre. Le mélange entre ces différentes fibres, thermoplastiques et de renfort, est préférentiellement dans une proportion identique, voire selon un ratio de type 60/40 au profit des thermoplastiques. La densité du matériau composite pour la réalisation d'un panneau support 2 est généralement de l'ordre de 0,7 à 0,9 après compression ou injection.

Par ailleurs, en dépit de l'hétérogénéité des compositions respectives des éléments superposés, l'ensemble selon l'invention est réalisé par un assemblage de différents éléments qui permet de conserver une cohésion suffisante pour éviter un éclatement ou un désassemblage des différents éléments superposés de la pièce de garniture lors du déploiement d'un coussin d'airbag. Le revêtement de type textile ou peau et le support qui contribuent à la réalisation de l'ensemble 1 de pièce de garniture sont maintenus réunis par l'intermédiaire notamment de l'interface 32 d'assemblage ou d'adhésion qui assure un maintien du revêtement intégrant au moins un textile ou peau 31 avec le panneau support 2. Aussi, une rupture de l'ensemble de la pièce de garniture ne survient pas dans une zone de faiblesse susceptible d'exister entre deux éléments superposés d'une pièce de garniture présentant des compositions hétérogènes.

Le textile ou peau 31 intégré au revêtement est sélectionné pour ne pas freiner, voire empêcher, la rupture de l'ensemble 1 de pièce de garniture. Ce textile ou peau 31 qui réalise une surface 311 orientée vers l'intérieur de l'habitacle, présente ainsi des qualités de déchirure suffisantes pour éviter que deux portions juxtaposées du panneau support 2, une fois celui-ci rompu, ne demeurent involontairement assemblées. Le textile ou peau 31 est ainsi sélectionné pour présenter une fragilité à la traction dans le plan du textile ou peau ou dans le plan de positionnement des fibres du textile. Sous l'effet d'une rupture du panneau support 2 et de la séparation de deux portions juxtaposées de ce panneau support 2 de part et d'autre d'une ligne d'affaiblissement 4, lors du déploiement du coussin d'airbag, le textile ou peau 31 du revêtement fixé à la surface du panneau support 2 par une interface 32 d'assemblage ou d'adhésion, supporte une traction dans son plan, notamment au niveau de la zone du panneau support 2 formant la ligne de rupture entre deux portions juxtaposées du panneau support 2. La tension exercée par cette traction, au niveau de la ligne d'affaiblissement 4 dans le textile ou peau 31 du revêtement, entraine sa déchirure. Cet affaiblissement 4 réalisé dans l'épaisseur de la superposition de l'ensemble 1 correspond sensiblement à une prédécoupe ou à une pré-déchirure qui présente la forme d'une cavité borgne ouverte au niveau de la surface opposée à la surface 311 de l'ensemble destinée à être orientée vers l'intérieur de l'habitacle. La réalisation d'une cavité borgne permet de conserver une homogénéité sur la surface 311 destinée à être orientée vers l'intérieur de l'habitacle. Ainsi, la fragilisation de l'ensemble 1 de l'invention n'est pas visible ni identifiable pour une personne installée dans l'habitacle, tant que l'airbag n'est pas déployé.

Selon un exemple réalisation se rapportant à une variante de construction de l'invention, le revêtement comprend au moins une couche de matière supplémentaire associée au textile ou peau 31 sur sa face opposée à la surface 311 orientée vers l'intérieur de l'habitacle. Cette matière supplémentaire est susceptible d'être alvéolaire, de type mousse, ou encore en matériau textile, en tricot tridimensionnel, ou en feutre ou également en matériau non-tissé, de façon à apporter un confort au toucher du revêtement.

Selon un exemple de réalisation se rapportant à une autre variante de construction de l'invention et susceptible d'être combinée avec les autres variantes précédemment détaillées, l'interface 32 d'assemblage ou d'adhésion du revêtement intégrant le textile ou peau 31 au panneau support 2 comprend essentiellement des fibres. Selon une première variante, ces fibres sont de type polyester de sorte que, par échauffement à une température inférieure à leur température de fusion, notamment au contact d'un panneau support 2 préchauffé, ces fibres de polyester conservent leur intégrité physique et opèrent une adhésion par imbrication mécanique avec le matériau du panneau support 2. Selon une seconde variante, ces fibres sont de type polypropylène de sorte que, par échauffement à une température supérieure à leur température de fusion, notamment au contact d'un panneau support 2 préchauffé, ces fibres de polypropylène sont fondues pour opérer une adhésion par soudure ou fusion de matière au niveau de la surface du panneau support 2. Selon une troisième variante, l'interface 32 d'assemblage ou d'adhésion est réalisée par un mélange de fibres de type polyester et polypropylène qui permet d'opérer une adhésion par action combinée des modes d'adhérence respectifs de chacune de ces types de fibres.

Selon un exemple de réalisation se rapportant à une autre variante de construction de l'invention et susceptible d'être combinée avec les autres variantes précédemment détaillées, l'interface 32 d'assemblage ou d'adhésion du revêtement intégrant un textile ou peau 31 au panneau support 2 présente une composition dont les propriétés d'adhérence avec le panneau support 2 sont aptes à résister à une force de traction en pelage à 90° selon la méthode d'essai D513022 d'au moins 15 Newton pour une rupture cohésive et/ou d'au moins 25 Newton pour une rupture adhésive. De même, l'interface 32 d'assemblage ou d'adhésion du revêtement intégrant un textile ou peau 31 est susceptible de présenter une composition dont les propriétés d'adhérence avec le revêtement sont aptes à résister à une force de traction en pelage à 180° selon la méthode d'essai D111157 d'au moins 20 Newton, voire préférentiellement d'au moins 35 Newton. De telles propriétés se retrouvent notamment, à titre d'exemple, dans le cadre d'une interface 32 d'assemblage ou d'adhésion ou tout autre interface réalisée sous la forme d'une colle à base de polyuréthane activable à chaud. Selon un autre exemple de réalisation, l'interface 32 d'assemblage ou d'adhésion présente une composition comprenant essentiellement, sinon intégralement, des fibres de polyester PET ou poly-téréphtalate d'éthylène. L'interface 32 d'assemblage ou d'adhésion est susceptible de présenter une composition issue d'un mélange comprenant également des fibres de polypropylène dans une proportion susceptible d'atteindre 50% du mélange. Aussi, l'interface 32 d'assemblage ou d'adhésion est susceptible de présenter une composition comprenant 50% de fibres de poly-téréphtalate d'éthylène et 50% de fibres de polypropylène. De même, la composition de l'interface 32 d'assemblage ou d'adhésion est susceptible de comprendre du polyuréthanne.

A titre complémentaire, la couche formant l'interface 32 d'assemblage ou d'adhésion est susceptible d'être réalisée par un dépôt de matière faisant intervenir une pulvérisation ou un dépôt au râcle, voire encore, selon la composition à déposer, au cylindre transfert ou au cylindre graveur. De même, lorsque l'interface 32 d'assemblage ou d'adhésion comprend essentiellement des fibres, telles que des feutres ou des fibres non-tissées, des dépôts de matière par aiguilletage ou par liage jet d'eau sont susceptibles d'être envisagés.

Par ailleurs, l'interface 32 d'assemblage ou d'adhésion présente préférentiellement un grammage compris entre 100 g/m² et 200 g/m², voire idéalement compris entre 130 g/m² et 150 g/m², notamment dans le cadre d'une interface 32 d'assemblage réalisée en matériau non-tissé.

Selon un exemple de réalisation se rapportant à une autre variante de construction de l'invention et susceptible d'être combinée avec les autres variantes précédemment détaillées, la au moins une ligne d'affaiblissement 4 est réalisée sous la forme d'une cavité, continue ou discontinue, dans l'épaisseur de l'ensemble, cette cavité étant positionnée et ouverte sur la surface de l'ensemble 1 opposée à la surface 311 destinée à être orientée vers l'intérieur de l'habitacle. Cette cavité borgne est susceptible de prendre la forme d'un arrangement rainuré dans l'épaisseur de l'ensemble 1 de pièce de garniture. Cet arrangement rainuré est ainsi susceptible d'adopter une distribution de segments rectilignes et/ou intégrant différentes courbures. Outre la forme d'une rainure formée par une unique cavité continue, cet arrangement rainuré est également susceptible d'être réalisé par une juxtaposition de trous borgnes disposés selon un alignement correspond sensiblement à une cavité discontinue pour l'affaiblissement de , de façon à opérer une fragilisation de l'ensemble 1 de pièce de garniture qui soit ciblée et contrôlée au niveau de cette cavité discontinue.

Selon un exemple de réalisation se rapportant à une autre variante de construction de l'invention spécifique de la variante précédemment détaillée, la au moins une ligne d'affaiblissement 4 est réalisée sous la forme d'une cavité, continue ou discontinue, dont la profondeur dans l'épaisseur de l'ensemble 1 n'affecte pas le textile ou peau 31 du revêtement. Ainsi, la cavité sous la forme d'un trou borgne présente une profondeur qui, au plus rejoint le revêtement textile ou peau 31, sans s'enfoncer dans l'épaisseur du revêtement textile ou peau 31. La profondeur de la cavité dans l'ensemble 1 de pièce de garniture est susceptible d'être ajustée selon l'importance de la fragilisation recherchée. Toutefois, compte tenu de la capacité de déchirure propre au revêtement textile ou peau 31, il est inutile que l'évidement atteigne l'épaisseur de ce revêtement 31. Par ailleurs, une cavité qui serait également réalisée dans une partie de l'épaisseur du revêtement textile ou peau 31 permettrait d'opérer une fragilisation supplémentaire de ce revêtement 31, mais serait également susceptible de modifier la qualité de la surface 311 destinée à être orientée vers l'intérieur de l'habitacle et donc d'y être visible pour une personne installée dans l'habitacle. Aussi, pour opérer une fragilisation optimale de l'ensemble 1 de pièce de garniture, la cavité présente idéalement une profondeur qui affleure la couche de l'ensemble 1 formé par le revêtement textile ou peau 31.

Selon un exemple de réalisation se rapportant à une autre variante de construction de l'invention et susceptible d'être combinée avec les autres variantes précédemment détaillées, la au moins une ligne d'affaiblissement 4 est réalisée par une opération de scoring laser. Cette technologie permet d'opérer une prédécoupe permettant de profiter des avantages de manipulation d'un laser, tout en autorisant un contrôle précis de la profondeur de coupe ou de dégradation de matière effectuée par le laser.

Selon un exemple de réalisation se rapportant à une autre variante de construction de l'invention et susceptible d'être combinée avec les autres variantes précédemment détaillées, l'ensemble 1 comprend également un canal d'airbag dont l'orifice est associé à un ou plusieurs volets, positionné contre la surface du panneau support 2 opposée à la surface 311 de l'ensemble 1 destinée à être orientée vers l'intérieur de l'habitacle, notamment en correspondance avec un ou plusieurs volets formés par le panneau support 2. De façon préférée, au moins une ligne d'affaiblissement 4 de l'ensemble 1 de pièce de garniture est positionnée en superposition avec au moins une partie du bord d'au moins un volet. Aussi, lors du déploiement du coussin d'airbag, l'ensemble 1 est fragilisé au niveau des zones de jonction des volets entre eux et/ou avec le bord de l'orifice, de sorte que, la déchirure de portions stratégiques de l'ensemble 1 de pièce de garniture se trouve facilitée et sans que l'ensemble 1 de pièce de garniture ne perturbe l'ouverture de ces volets d'airbag.

L'invention porte également sur un procédé de production d'un ensemble 1 de pièce de garniture selon l'invention, caractérisé en ce que le procédé comprend une étape d'assemblage d'un panneau support en matériau composite comprimé ou injecté combinant au moins une résine thermoplastique et des fibres de renfort avec un revêtement de garniture portant au moins une surface destinée à être orientée vers l'intérieur de l'habitacle.

Selon un premier exemple de mise en oeuvre se rapportant à une variante de l'invention, le procédé faisant intervenir un moule de thermocompression comprend au moins :
- une étape de chauffage d'un matériau composite combinant au moins une résine thermoplastique et des fibres de renfort destiné à réaliser le panneau support 2,
- une étape de transfert du matériau composite chauffé en superposition contre un revêtement textile ou peau 31 associé, sur l'une 311 de ses surfaces, à une interface 32 d'assemblage ou d'adhésion présentant au moins une composition adhésive ou susceptible d'opérer une adhésion,
- une étape de compression des éléments 2, 31, 32 superposés dans un moule.

Lors de l'étape de chauffage, la composition de l'interface 32 d'assemblage ou d'adhésion est susceptible de changer d'état pour devenir visqueuse, notamment grâce à la présence de fibres de polypropylène, éventuellement mélangées à des fibres de polyester, de sorte que cette interface 32 se trouve en mesure d'épouser et de se mélanger avec la matière de la surface du revêtement qui intègre le textile ou peau 31 et que, après refroidissement, cette interface 32 adhère et demeure fixée au revêtement textile ou peau 31 et au panneau support 2 positionnés de part et d'autre de cette interface 32 d'assemblage ou d'adhésion.

Selon un second exemple de mise en oeuvre se rapportant à une variante de l'invention, le procédé faisant intervenir un moule d'injection comprend au moins :
- une étape de préparation d'un mélange composite combinant au moins une résine thermoplastique et des fibres de renfort destiné à réaliser le panneau support 2,
- une étape de positionnement du revêtement de garniture 3 contre une partie de la surface intérieure du moule d'injection de sorte que, d'une part, le revêtement textile ou peau 31 soit orientée vers la paroi du moule et, d'autre part, l'interface 32 d'assemblage ou d'adhésion soit orientée vers l'intérieur du moule d'injection,
- une étape d'injection du mélange composite.
Lors de l'étape d'injection, le mélange composite entre en contact avec la surface de l'interface 32 d'assemblage ou d'adhésion. Sous l'effet de la chaleur du mélange injectée, la composition de l'interface 32 d'assemblage ou d'adhésion est en mesure de changer d'état pour devenir visqueuse et se mélanger avec la matière de la surface du revêtement qui intègre le textile ou peau 31. Après refroidissement, cette interface 32 adhère et demeure fixée, d'une part, au revêtement textile ou peau 31 et, d'autre part, au panneau support 2.

Selon un exemple spécifique se rapportant à une variante de chacun des deux exemples de mise en oeuvre précédemment détaillée de l'invention, le procédé comprend également une étape d'affaiblissement d'au moins une portion de l'épaisseur de l'ensemble 1 par la réalisation d'au moins un affaiblissement 4 sous la forme d'une cavité borgne ouverte au niveau de la surface opposée au revêtement textile ou peau 31. Cette cavité ouverte est, par exemple, opérée par une opération de scoring laser qui réalise une coupe ou une dégradation de matière dans l'épaisseur de l'ensemble 1 depuis la surface opposée à la surface 311 de l'ensemble destinée à être orientée vers l'intérieur de l'habitacle.

Par la suite, l'ensemble 1 de pièce de garniture est susceptible d'être monté et/ou fixé sur la structure d'un panneau d'airbag comprenant un canal d'airbag dont l'orifice est associé à un ou plusieurs volets.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention. 1

## Revendications

1. Ensemble (1) de pièce de garniture pour habitacle intérieur de véhicule comprenant une superposition réalisée par au moins :
- un panneau support (2) en matériau composite comprimé ou injecté combinant au moins une résine thermoplastique et des fibres de renfort,
- un revêtement de garniture (3) portant au moins une surface (311) destinée à être orientée vers l'intérieur de l'habitacle, ce revêtement de garniture (3) comprenant notamment :
- un revêtement destiné à réaliser une surface (311) orientée vers l'intérieur de l'habitacle, le revêtement comprenant au moins un textile ou peau (31) adapté pour être déchirable sous l'effet d'une force exercée contre la surface opposée à la surface (311) de l'ensemble destinée à être orientée vers l'intérieur de l'habitacle,
- une interface (32) d'assemblage ou d'adhésion du revêtement au panneau support (2), cette interface (32) d'assemblage ou d'adhésion présentant au moins une composition adhésive ou susceptible d'opérer une adhésion au panneau support (2),
l'ensemble (1) comprenant également au moins un affaiblissement (4) formé par une cavité borgne dans l'épaisseur de la superposition de l'ensemble (1).

2. Ensemble (1) selon la revendication 1, **caractérisé en ce que** le revêtement comprend au moins une couche de matière supplémentaire associée au textile ou peau (31) sur sa face opposée à la surface (311) orientée vers l'intérieur de l'habitacle.

3. Ensemble (1) selon une des revendications précédentes, **caractérisé en ce que** l'interface (32) d'assemblage ou d'adhésion du revêtement intégrant un textile ou peau (31) au panneau support (2) comprend essentiellement des fibres de type polyester et/ou de type polypropylène.

4. Ensemble (1) selon une des revendications précédentes, **caractérisé en ce que** l'interface (32) d'assemblage ou d'adhésion du revêtement intégrant un textile ou peau (31) au panneau support (2) présente une composition dont les propriétés d'adhérence avec le panneau support (2) sont aptes à résister à une force de traction en pelage à 90° selon la méthode d'essai D513022 d'au moins 15 Newton pour une rupture cohésive et/ou d'au moins 25 Newton pour une rupture adhésive.

5. Ensemble (1) selon une des revendications précédentes, **caractérisé en ce que** l'interface (32) d'assemblage ou d'adhésion du revêtement intégrant un textile ou peau (31) présente une composition dont les propriétés d'adhérence avec le revêtement sont aptes à résister à une force de traction en pelage à 180° selon la méthode d'essai D111157 d'au moins 35 Newton.

6. Ensemble (1) selon une des revendications précédentes, **caractérisé en ce que** la au moins une ligne d'affaiblissement (4) est réalisée sous la forme d'une cavité, continue ou discontinue, dans l'épaisseur de l'ensemble, cette cavité étant positionnée et ouverte sur la surface de l'ensemble (1) opposée à la surface (311) destinée à être orientée vers l'intérieur de l'habitacle.

7. Ensemble (1) selon la revendication 5, **caractérisé en ce que** la au moins une ligne d'affaiblissement (4) est réalisée sous la forme d'une cavité, continue ou discontinue, dont la profondeur dans l'épaisseur de l'ensemble (1) n'atteint pas le textile ou peau (31) du revêtement.

8. Ensemble (1) selon une des revendications précédentes, **caractérisé en ce que** la au moins une ligne d'affaiblissement (4) est réalisée par une opération de scoring laser.

9. Ensemble (1) selon une des revendications précédentes, **caractérisé en ce que** l'ensemble (1) comprend également un canal d'airbag dont l'orifice est associé à un ou plusieurs volets, positionné contre la surface du panneau support (2) opposée à la surface (311) de l'ensemble (1) destinée à être orientée vers l'intérieur de l'habitacle, notamment en correspondance avec un ou plusieurs volets formés par le panneau support (2).

10. Procédé de production d'un ensemble (1) de pièce de garniture selon une des revendications 1 à 6, **caractérisé en ce que** le procédé comprend une étape d'assemblage d'un panneau support (2) en matériau composite comprimé ou injecté combinant au moins une résine thermoplastique et des fibres de renfort avec un revêtement de garniture (3) portant au moins une surface (311) destinée à être orientée vers l'intérieur de l'habitacle.

11. Procédé de production selon la revendication 10, **caractérisé en ce que** le procédé faisant intervenir un moule de thermocompression comprend au moins :
- une étape de chauffage d'un matériau composite combinant au moins une résine thermoplastique et des fibres de renfort destiné à réaliser le panneau support (2),
- une étape de transfert du matériau composite chauffé en superposition contre un revêtement textile ou peau (31) associé, sur l'une (311) de ses surfaces, à une interface (32) d'assemblage ou d'adhésion présentant au moins une composition adhésive ou susceptible d'opérer une adhésion,
- une étape de compression des éléments (2, 31, 32) superposés dans un moule.

12. Procédé de production selon la revendication 10, **caractérisé en ce que** le procédé faisant intervenir un moule d'injection comprend au moins :
- une étape de préparation d'un mélange composite combinant au moins une résine thermoplastique et des fibres de renfort destiné à réaliser le panneau support (2),
- une étape de positionnement du revêtement de garniture (3) contre une partie de la surface intérieure du moule d'injection de sorte que, d'une part, le revêtement textile ou peau (31) soit orientée vers la paroi du moule et, d'autre part, l'interface (32) d'assemblage ou d'adhésion soit orientée vers l'intérieur du moule d'injection,
- une étape d'injection du mélange composite.

13. Procédé de production selon une des revendications 10 à 12, **caractérisé en ce que** le procédé comprend également une étape d'affaiblissement d'au moins une portion de l'épaisseur de l'ensemble (1) par la réalisation d'au moins un affaiblissement 4 sous la forme d'une cavité borgne ouverte au niveau de la surface opposée au revêtement textile ou peau (31). 1
